# EUROPEAN PATENT SPECIFICATION

(11) **EP 1 278 427 B1**
(45) Date of publication and mention of the grant of the patent: **26.07.2006**
(21) Application number: 01938090.6
(22) Date of filing: 06.04.2001
(51) Int. Cl.: A23D 7/00

(54) **POURABLE FRYING COMPOSITION**
GIESSBARE BRATÖLZUSAMMENSETZUNG
COMPOSITION VERSABLE POUR LA FRITURE

(30) Priority: 04.05.2000 EP 00201631
(43) Date of publication of application: 29.01.2003
(73) Proprietor: UNILEVER N.V., 3013 AL Rotterdam (NL); UNILEVER PLC, London EC4P 4BQ (GB)
(72) Inventor: BAUER-PLANK, Christina, Unilever Res. Vlaardingen, NL-3133 AT Vlaardingen (NL); VAN DEN KOMMER, Marcelle, Unilever Res Vlaardingen, NL-3133 AT Vlaardingen (NL); SEGERS, Marcel C.H.M., Van den Bergh Nederland, NL-3071 JL Rotterdam (NL)
(74) Representative: Joppe, Hermina Laura Petronella
(86) International application number: PCT/EP2001/003929
(87) International publication number: WO 2001/082712

(56) References cited:
- US-A- 5 436 021
- DATABASE WPI Section Ch, Week 198414 Derwent Publications Ltd., London, GB; Class D13, AN 1984-086176 XP002150222 MADSEN J GRINDSTED: "Frying margarine with low salt content - contg. citric acid ester as anti-spattering agent" & RESEARCH DISCLOSURE, vol. 239, no. 018, 10 March 1984 (1984-03-10), Emsworth, GB
- DATABASE WPI Section Ch, Week 198751 Derwent Publications Ltd., London, GB; Class D13, AN 1987-360820 XP002177266 GRINDSTED PROD AS: "Soft fat spreads with good frying properties - made using citric acid ester(s) of mono:glyceride(s) as emulsifier" & RESEARCH DISCLOSURE, vol. 283, no. 064, 10 November 1987 (1987-11-10), Emsworth, GB
- PATENT ABSTRACTS OF JAPAN vol. 1997, no. 10, 31 October 1997 (1997-10-31) -& JP 09 143491 A (TAIYO KAGAKU CO LTD), 3 June 1997 (1997-06-03)
- DATABASE WPI Section Ch, Week 199522 Derwent Publications Ltd., London, GB; Class D13, AN 1995-166311 XP002150245 -& JP 07 087889 A (ASAHI DENKA KOGYO KK), 4 April 1995 (1995-04-04)
- PATENT ABSTRACTS OF JAPAN vol. 1996, no. 10, 31 October 1996 (1996-10-31) -& JP 08 140611 A (KAO CORP), 4 June 1996 (1996-06-04)

## Description

The present invention relates to an edible frying composition comprising a fat phase and an aqueous phase which composition comprises an anti-spattering agent. The compositions are pourable products as evidenced by a Bostwick value of equal to or more than 7 cm/30 sec, preferably more than 10 cm/30 sec at 15 °C.

### Background

Edible compositions comprising a fat phase and an aqueous phase are well known frying media for shallow frying.

In recent years consumer concern on health has increased and hence frying products which are not 100 wt% fat shortenings or oils but products that comprise a varying amount of water of up to about 60 wt% are used in shallow frying. Emulsified water in a frying product leads to spattering problems when such products are used in shallow frying.

Spattering of a water in oil emulsion is believed to be caused by superheating of water droplets. At a certain point after heating water droplets explosively evaporate, whereby the product can be spread all over the surroundings of a frying pan in which the emulsion is heated. This may cause danger to the person who fries foodstuff in the heated emulsion and it also often causes a mess in the kitchen.

It is known to add anti-spattering agents like lecithin or salt to frying products to reduce the spattering tendency. Pourable frying products with low water content comprising lecithin to reduce spattering are disclosed in US 4399165 Lecithin seems to be the most commonly used anti-spattering agent.

An alternative for lecithin is desired which shows the same outstanding anti-spattering functionality. Replacement of lecithin is desired for several reasons, one of which is that the most common source for lecithin is soy bean. Soy beans are nowadays often associated with genetic modification and hence ingredients from this source are not preferred for certain groups of consumers although they are scientifically considered fully functional and safe.

Alternative anti-spattering agents have been suggested for spreadable products. These agents are usually combined with lecithin and include monoglycerides, phosphatides, citric acid esters of monoglycerides, and combinations of these.

RD 24152 discloses the use of citric acid esters and lecithin in a low fat spreadable product comprising about 52 wt% fat.

For pourable emulsions care should be taken that the anti-spattering agent does not considerably influence the emulsion stability or other emulsion characteristics such as the pourability. Some anti-spattering agents with emulsifying function are known to lead to crystallisation of the fat blend over time, thus leading to decreased pourability.

RD 28364 discloses a 60% fat spread wherein a mixture of citric acid ester of saturated monoglycerides in the water and the fat phase, in combination with unesterified monoglyceride, shows good frying properties.

However these anti-spattering agents in the fat spread do not perform as well as lecithin in reduction in spattering. Moreover RD 28364 relates to spreadable products only while there is no teaching on suitable compositions for pourable emulsions.

It has now surprisingly been found that in pourable emulsions, esters of citric acid with a monoglyceride or with a combination of a monoglyceride and a diglyceride, are suitable replacers for lecithin, showing similar to even better performance as anti-spattering agents in pourable frying products comprising an aqueous phase and a fatty phase.

Therefore the invention relates to a pourable, edible frying composition comprising an aqueous phase and a fatty phase, which composition comprises an ester of citric acid with a monoglyceride or with a combination of a monoglyceride and a diglyceride.

The invention further relates to a process for the preparation of such frying products.

### Detailed description

Products according to the invention are products with a Bostwick value of at least 7 cm/30 sec at 15 °C. The method to determine Bostwick value is described in the examples.

All concentrations in this specification are weight concentrations unless indicated otherwise.

Ther terms "fat" and "oil" are used interchangeably in this application.

Spattering can be measured by determining the spattering value according to the method illustrated in the examples. Preferably food products according to the invention show a primary spattering value, SV1, (spattering upon heating of a frying product such as margarine, without incorporation of a food product to be fried) of from 7 to 10, more preferably from 8.0 to 10. The secondary spattering value, SV2, (spattering upon incorporation of a food product such as meat in a shallow frying product) for products according to the invention is preferably from 5-10.

The frying compositions according to the invention can be used in shallow frying of food stuff.

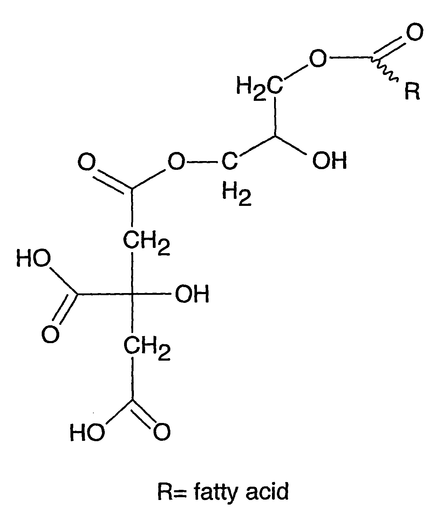

The composition according to the invention comprises an ester of citric acid with a monoglyceride or a combination of a monoglyceride and a diglyceride. Citric acid and a monoglyceride (monoester of glycerol and a fatty acid) or a diglyceride (di-ester of glycerol and two fatty acids) can form an ester under certain reaction conditions. The resulting reaction product mainly comprises citric acid, wherein one carboxylic group is esterified with one of the free hydroxylgroups of the glycerol backbone of the mono- or diglyceride. Some di- or even tri-esterified citric acid may be present in the reaction mixture, depending on the specific reaction conditions used such as temperature and reaction time. One monoglyceride molecule can also be esterified with two citric acid molecules.
An example of a mono-ester is given in figure 1.

A suitable process for the manufacture of citric acid esters of partial glycerides is disclosed in US 4,071,544. As disclosed in this document, the relative amount of citric acid to partial fatty acid glycerides in the reaction mixture determines the properties of the final product.

For the purpose of the invention, mono-esters are preferred.

For the purpose of the invention the term "ester of citric acid with a monoglyceride or with a combination of a monoglyceride and a diglyceride" encompasses monoesters, di-esters, triesters and mixtures thereof. This term also includes esters wherein one monoglyceride is esterified with more than one citric acid molecule.

In this application, the above described ester or mixture of esters is also referred to as "ester of citric acid" or "citric acid ester".

Throughout this application, the term "partial glycerides" refers to both monoglycerides and diglycerides.
The ester of citric acid is preferably present in an amount of from 0.07 to 3 wt%, preferably 0.1 to 3 wt% on total product weight. A lower level may not show significant reduction in spattering and a higher amount leads to taste defects.

Pourable frying products comprising said ester of citric acid were found to show reduced spattering. Especially surprisingly good improvement was found for secondary spattering.

Some lecithin may be present in the compositions according to the invention, but its absence is highly preferred in view of the above given reasons.
Therefore in a preferred embodiment, the invention relates to a pourable frying composition which is essentially free of lecithins or compounds derived from lecithin.

Without wishing to be bound by any theory, applicants believe that the ester of citric acid may partly function as an emulsifier by settling at the interface between the water and the oil phase of the present composition.

Satisfying results in reduced spattering are seen when the ester is randomly distributed over the final product. Optionally, the pourable frying composition comprises after melting an aqueous phase, a fat phase and optionally an intermediate phase, wherein the aqueous phase and the intermediate phase together comprise 60 to 100 wt% of the total amount of the ester of citric acid present in the frying composition.

Such products show good results in reduction of spattering. This is illustrated in the examples.

After melting and separating phases the aqueous phase and the intermediate phase together preferably comprise from 0.07 to 3 wt% of said ester of citric acid on total product weight. Amounts below 0.07 wt% generally do not show the preferred improvement in spattering behaviour, although some improvement might be observed. Amounts above 3 wt% on aqueous phase lead to taste defects.

In preferred products the amount of citric acid ester in the fat phase of the final frying composition, when analysed according to the method disclosed in the examples, is below 0.9 wt%.

The esters are for example prepared in a reaction of citric acid with monoglycerides or with a mixture of mono-and diglycerides. Examples of suitable partial glyceride starting compounds are Hymono^{tm} (comprising at least 90 wt% monoglycerides on total amount of partial glycerides) or Admul^{tm} (comprising at least 60 wt% monoglycerides on total amount of partial glycerides).

It has been found that the preferred amount of monoglycerides in the mono/diglyceride mixture is at least about 30 wt% on total weight of the partial glycerides from which the citric acid ester is prepared. If the amount of monoglycerides is below about 30 wt%, the amount of ester that forms is very low and moreover the solubility of the resulting product is less satisfactory.
More preferred the amount of monoglycerides in the mono/diglyceride mixture is at least 55 wt%, most preferred at least 85 wt% on total weight of the partial glycerides.

The esters that result from esterification of citric acid with a monoglyceride or with a mixture of monoglycerides and diglycerides are dispersible in the fat phase. In this fat dispersible form, they are also referred to as citric acid esters in the acidic form.
These fat dispersible citric acid esters can be converted into water dispersible citric acid esters by fully or partly neutralising the free carboxyl-groups. This is also referred to as neutralising the citric acid ester. Bases or salts thereof can be applied for neutralising. Examples of suitable bases or salts are potassium hydroxide, sodium hydroxide, calcium hydroxide, sodium carbonate. Combinations thereof can be applied.

An aqueous solution of neutralised citric acid ester preferably has a pH of between 5 and 6.

The mono-or diglycerides which are esterified with citric acid can be derived from any source or process. The mono - or diglycerides can be pure mono- or diglycerides of one fatty acid chain composition or can be a mixture of several monoglycerides or diglycerides with each a different fatty acid chain composition.

The fatty acid chains of the mono- or diglyceride can be any fatty acids. Preferred fatty acid chains are selected from the group of monoglycerides with fatty acids having a chain length of between 4 and 24 carbon atoms. These correspond to the fatty acids found in most well known triglyceride oils.

According to another preferred embodiment, at least 50 wt% of the esters are esters of citric acid with a partial glyceride having a fatty acid chain which is saturated.
As evidenced in the example, frying compositions comprising esters of these specific partial glycerides show better spattering values.

In a highly preferred embodiment, the frying composition comprises from 0.2 to 1.5 wt% of a citric acid ester of a monoglyceride with a fatty acid chain comprising C16 or C18 fatty acids, wherein from 50 to 100 % of the fatty acid chains are saturated fatty acids.

Examples of suitable fatty acids are fatty acids derived from a vegetable fat such as soy bean oil, rapeseed oil, olive oil, palm oil, sunflower oil, corn oil, safflower oil, cotton seed oil, palmkernel oil, coconut oil, linseed oil, butter or fractions thereof, or lauric oils.

In case of esters of citric acid with diglycerides, the two fatty acid chains may be the same or different.

Suitable fat soluble citric acid esters include those having an iodine value of from 0 to 130, an acid value of from 0 to 290 and a saponification value of from 200 to 610.

Suitable water soluble citric acid esters include those having an iodine value of from 0 to 130, an acid value of from 0 to 230 and a saponification value of from 200 to 550.

Suitable fat dispersible citric acid esters include Grindsted^{tm} CITREM LR 10 citric acid ester, Grindsted^{tm} CITREM BC-FS, Lamegin ZE 306, Myvatem SC, CITREM 2931, Palsgaard 3301, Lamegin ZE 309 liquid.
Suitable water dispersible citric acid esters include Grindsted^{tm} CITREM N12, Lamegin ZE 609, Lamegin 609 liquid, Palsgaard 3325, CITREM 2932.

To further improve the current products, the frying composition optionally comprises from 0.1 to 5 wt% on total product weight of an emulsifier other than an ester of citric acid. Traditionally emulsifiers are present in spreadable margarines which are traditionally sold in a wrapper or a tub. Emulsifiers are generally believed to effectively increase the stability of an emulsion (Food science and technology, G. Hoffmann, Academic press, 1989, page 147, par Al). Examples of emulsifiers are mono- and diglycerides. Combinations thereof are possible. The specific, most suitable composition is dependent on the type of emulsion (such as water in oil or oil in water) as desired. It is believed that the person skilled in pourable/liquid frying product technology is aware of the emulsifier combination to use. However care should be taken that the emulsifiers known for spreadable products are not always suitable for pourable products.

Preferably, substantially no added monoglyceride is present, i.e. during the preparation no additional monoglycerides were added to the pourable frying composition apart from what is present in the citric acid ester ingredient. More preferably the amount of added monoglyceride is less than 0.1 wt.%. Citric acid ingredient is herein defined as an ingredient comprising a citric acid ester. Commercially available citric acid esters, which are suitable as citric acid ingredient, may comprise up to 50 weight % of monoglyceride.

Optionally, frying compositions according to the invention comprise a protein or a combination of proteins. These proteins may serve, in very low amounts, for browning of the composition during heating and they may positively influence frying signal functions like foaming when the frying composition is heated in a frying pan. Suitable amounts of protein are from 0.05 to 2 wt% on total product weight.

Examples of suitable proteins are soy protein, dairy proteins such as protein originating from whey powder, skimmed milk powder, butter milk powder; or combinations of any of these proteins.

A frying composition according to the invention preferably comprises from 60 to 98 wt% of a triglyceride fat or a mixture of triglyceride fats (fat blend).

Most known fat blends that are suitably used in liquid frying compositions were found to be suitable for products according to the invention.

A suitable fat blend for liquid frying products usually consists of a mixture of an oil, a fat which at ambient temperature is fully liquid, and a fat which is solid at ambient temperature, the so-called hardstock. The ratio of liquid and solid fat is chosen such that after proper processing together with an aqueous phase a product with a suitable pourable consistency is obtained.
The presence of hardstock fat in liquid frying products aims to contribute to stabilisation of the emulsion. Unstable liquid frying products show phase separation in the form of oil separation.
The solid fat crystals which are needed for the stability of the emulsion, on the other hand may adversely affect its pourability. Liquid frying products manufacture therefore requires a hardstock fat with properties which are delicately balanced. Any suitable hardstock may be used.

A liquid frying product having a pourability rating (Bostwick value) of less than 7 cm/30 seconds is mostly too thick and lacks acceptable pourability.

Fully hydrogenated high erucic rapeseed oil (shortly denoted as fully hardened rapeseed oil or RPh70) is a well known hardstock fat which complies with the above specification. It is suited for the manufacture of satisfactory liquid or squeezable frying products which combine good stability with good pourability. However also other hardstocks may be used such as sunflower seed oil with a melting point of about 69 °C, soy bean oil with a melting point of about 65 °C, palm oil with a melting point of about 58 °C, arachidic oil with a melting point of about 60 °C and cotton seed oil with a melting point of about 62 °C. Combinations of one or more of these hardstock fats or interesterified blends of these fats may also be suitably applied.

Presently, from all above mentioned fats mainly fully hardened rapeseed oil is employed for the commercial preparation of high quality liquid frying products. Its use is described e.g. in US 5,756,142.

Most liquid or squeezable frying products are prepared with 1.5 - 5 wt.% hardstock fat on total product.

In addition to the hardstock the fat blend comprises a relatively low melting fat.
As the low melting fat an oil rich in triglycerides comprising (poly) unsaturated fatty acid residues is highly preferred.
Therefore the low melting fat is preferably selected from the group comprising sunflower oil, soybean oil, rapeseed oil, cottonseed oil, olive oil, corn oil, groundnut oil, or low melting butterfat fractions and/or combinations thereof. These fats may be partially hydrogenated.

The composition of the fat blend is preferably such that the fat blend shows a solid content of 1 to 3, more preferred 2.5 to 3.0 % at 5 °C and 1.5 to 3, more preferred 2.0 to 2.5 % at 15 °C and 1 to 3, more preferred 1.5 to 2.0 % at 35 °C.

In addition to the above mentioned ingredients, food products according to the invention optionally contain further ingredients suitable for use in these products.

Examples of these ingredients are sweetener materials, EDTA, spices, vitamins, sterols and/or stanols, bulking agents, egg yolk, stabilising agents, flavouring materials, colouring materials, acids, preserving agents, flavour compositions, vegetable particles etc.
However the amount of these ingredients should be such that the desired characteristics are not severely drawn back by the presence of these ingredients. Therefore for example the presence of low amounts of flavour components, and/or colouring agents is tolerated. However the presence of large amounts of sugars or stabilising agents, which are known to cause burning in certain circumstances, is often less preferred.

Traditionally margarines and like products, and also butter comprise salt. Known pourable margarines comprise varying amounts of salt, which are tuned to the consumers desires. Preferably the amount of salt is between 0.2 to 3, preferably 0.8 to 3 wt% of salt. Most preferred levels of salt are from 1 to 2.5 wt%.

Advantageously, the pourable frying composition may comprise an amount of an edible salt of 1 wt.% or more, preferably 1.2 wt% or more, and more preferably 1.5 wt% or more. These levels of salt further improve the spattering performance. Any known edible salt may be added, but for reasons of taste and low price sodium chloride is highly preferred. Examples of other suitable salts are potassium chloride, choline chloride, ammonium chloride.

Optionally the products according to the invention comprise gas such as nitrogen, carbon dioxide or another, preferably inert gas. It has been found that such gas if present can suitably further stabilise an emulsion.

Generally the balance of compositions according to the invention will be water.

Products according to the invention can be prepared by general methods as known to the person skilled in the art. For example according to one embodiment, a premix comprising all ingredients is prepared, followed by blending and mixing in order to establish a suitable emulsion. If desired the crystallisation of solid fat if present can either be performed a priori or as a processing step in which the premix is cooled by one or more scraped surface heat exchangers. In such a step also the process of emulsification could take place. Emulsification could on the other hand as well be envisaged by other kinds of techniques as, e.g. membrane emulsification and alike.

According to another embodiment, a separate fat phase comprising a fat blend and fat dispersible ingredients and a separate aqueous phase comprising ingredients dispersed in water are mixed.

If a small amount of hardened fat such as hardened rapeseed oil is present in the final product, a preferred process comprises the steps of melting triglyceride oil, cooling to below the alpha crystallisation temperature and subsequent, or prior to cooling, mixing the triglyceride oil with the aqueous phase comprising water dispersible ingredients.

The resulting product is preferably stored at a temperature from 0 to 15 °C.

The ester of citric acid can be added at any moment in the process, generally before cooling and filling the product in packaging material.

The pH of the aqueous phase of the pourable frying compositions may vary within the range which is commonly used for frying compositions. Advantageously, the pH of the pourable frying composition is 5.5 or lower. At these pH values the spattering performance may be further improved.

It has been found that a pourable frying composition showing desired frying performance in low spattering, can be prepared by a process which comprises the steps of
(a) preparation of an aqueous phase
(b) preparation of an oil phase,
   wherein an ester of citric acid with a monoglyceride or with a combination of monoglyceride and a diglyceride is added to the aqueous phase and/or the oil phase in step (a) and/or (b),
(c) mixing of the aqueous phase and the oil phase to obtain an emulsion.

Spattering values for products prepared by this process were surprisingly found to be better than spattering values for products comprising the same amount and type of esters of citric acid, where these esters were added to the premix or to the emulsion of the oil phase and the water phase.

Therefore a preferred embodiment of the invention relates to this process and a frying composition obtained by this process.

Even more preferred in the above process 0.05 to 2 wt% of said ester of citric acid on total product weight is added to the oil phase in step (2).

According to a further preferred aspect of the invention, the aqueous phase prepared in step (1) comprises from 0.05 to 3 wt% of the ester of citric acid in neutralised form. This ester may be added to the aqueous phase or may be formed in situ by increasing the pH of an aqueous phase comprising the ester of citric acid in its acidic form.

In another embodiment the citric acid ester is added to the aqueous phase in a first step, which aqueous phase is mixed with a fat phase which is free of citric acid ester, in a second step.

The ester of citric acid in the aqueous phase and the one in the fat phase can be of a different fatty acid composition.

The citric acid ester may be added to both the fatty phase and the aqueous phase of the emulsion, and the total amount of said esters may be above 0.1 wt%. Such products show satisfying spattering behaviour.

The invention is illustrated by the following examples.

### Examples

### Measuring pourability

Pourability or squeezability is measured according to the standard Bostwick protocol. The Bostwick equipment consists of a 125 ml reservoir provided with a outlet near the bottom of a horizontally placed rectangular tub and closed with a vertical barrier. The tub's bottom is provided with a 25 cm measuring scale, extending from the outlet of the reservoir. When equipment and sample both have a temperature of 15°C, the reservoir is filled with 125 ml of the sample after it has been shaken by hand ten times up and down. When the closure of the reservoir is removed the sample flows from the reservoir and spreads over the tub bottom. The path length of the flow is measured after 30 seconds. The value, expressed as cm per 30 seconds is the Bostwick rating, which is used as yard stick for pourability.
The maximum value that can be determined with this measurement is 23.

### Determination of citric acid ester levels

Sampling of the aqueous phase and fatty phases of the frying composition was done by melting the product overnight in a thermostate at 70 °C. Then samples of the two phases were taken for analysis of the citric acid ester level.

Determination of the amount of citric acid ester in the fat phase, water phase and intermediate phase was done by hydrolysing the separated phases with base and acidifying them to pH 2-3, followed by filtering. The filtrate was analysed for citric acid according to the FCC (food Chemical Codex), 4^{th} edition, page 259, and the citric acid was recalculated to citric acid ester.

### Determination of spattering value

The spattering behaviour of food products according to the invention was evaluated after storage of the products 8 days at 5 °C.
Primary spattering (SV1) was assessed under standardised conditions in which an aliquot of a food product was heated in a glass dish and the amount of fat spattered onto a sheet of paper held above the dish was assessed after the water content of the food product had been driven off by heating.

Secondary spattering (SV2) was assessed under standardised conditions in which the amount of fat spattered onto a sheet of paper held above the dish is assessed after injection of a quantity of 10 ml water into the dish.

In assessment of both primary and secondary spattering value about 25 g food product was heated in a glass dish on an electric plate set at about 205 °C. The fat that spattered out of the pan by force of expanding evaporating water droplets was caught on a sheet of paper situated above the pan. The image obtained was compared with a set of standard pictures number 0-10 whereby the number of the best resembling picture was recorded as the spattering value. 10 indicates no spattering and zero indicates very bad spattering. The general indication is as follows.

| *Score* | *Comments* |
|---|---|
| 10 | excellent |
| 8 | good |
| 6 | passable |
| 4 | unsatisfactory for SV1, |
| | almost passable for SV2 |
| 2 | very poor |

Typical results for household margarines (80 wt% fat) are 8 for primary spattering (SV1) and 5 for secondary spattering (SV2) under the conditions of the above mentioned test.

### Measurement of pH and salt content.

The pH of a pourable edible frying composition is measured as follows. The aqueous phase is separated from the oil phase by heating the composition to 90°C for 45 minutes and then centrifuging the heated composition at 2800 rotations per minute for 5 minutes. The emulsions are separated due to this treatment into a distinct aqueous phase and a distinct oil phase. The phases were separated through decantation and the pH of the aqueous phase was measured with a pH measuring probe connected to a pH meter. Salt content can be analysed using elemental analysis.

### Example 1-5

### Preparation of frying product

Hardstock (fully hydrogenated rapeseed oil with a slip melting point of 70 °C) is heated to 70 °C and mixed with the remaining part of the fat soluble ingredients to for the fat phase at 55 °C. The fat phase is mixed with all other ingredients at about 55 °C to form a premix, which is treated in a votator process comprising in a first step treatment in a series of A units such that the temperature of the premix is reduced to about 5 °C. In a second step the resulting mixture is treated in a series of C units at about 750 - 900 rpm. During this treatment the temperature of the mixture rises to about 15 °C.
The product is subsequently packaged and stored to about 15 °C.

In process A the ester of citric acid in the acidic form is added to the fat phase before the fat phase is mixed with the aqueous phase.

In process B the ester of citric acid in the neutralised form is added to the aqueous phase before the aqueous phase is mixed with the fat phase.

In process C, the ester of citric acid in the acidic form is added to the fat phase and the ester of citric in the neutralised form is added to the aqueous phase before the aqueous phase and the fat phase, are mixed.

The product composition for examples 1-5 is shown in table 1.

The results in frying properties (SV1 and SV2) and oil exudation upon storage at 25 °C for 2 weeks are included in the bottom two rows of table 1. All samples showed a Bostwick value of about 15 cm/30 sec at 15 °C.

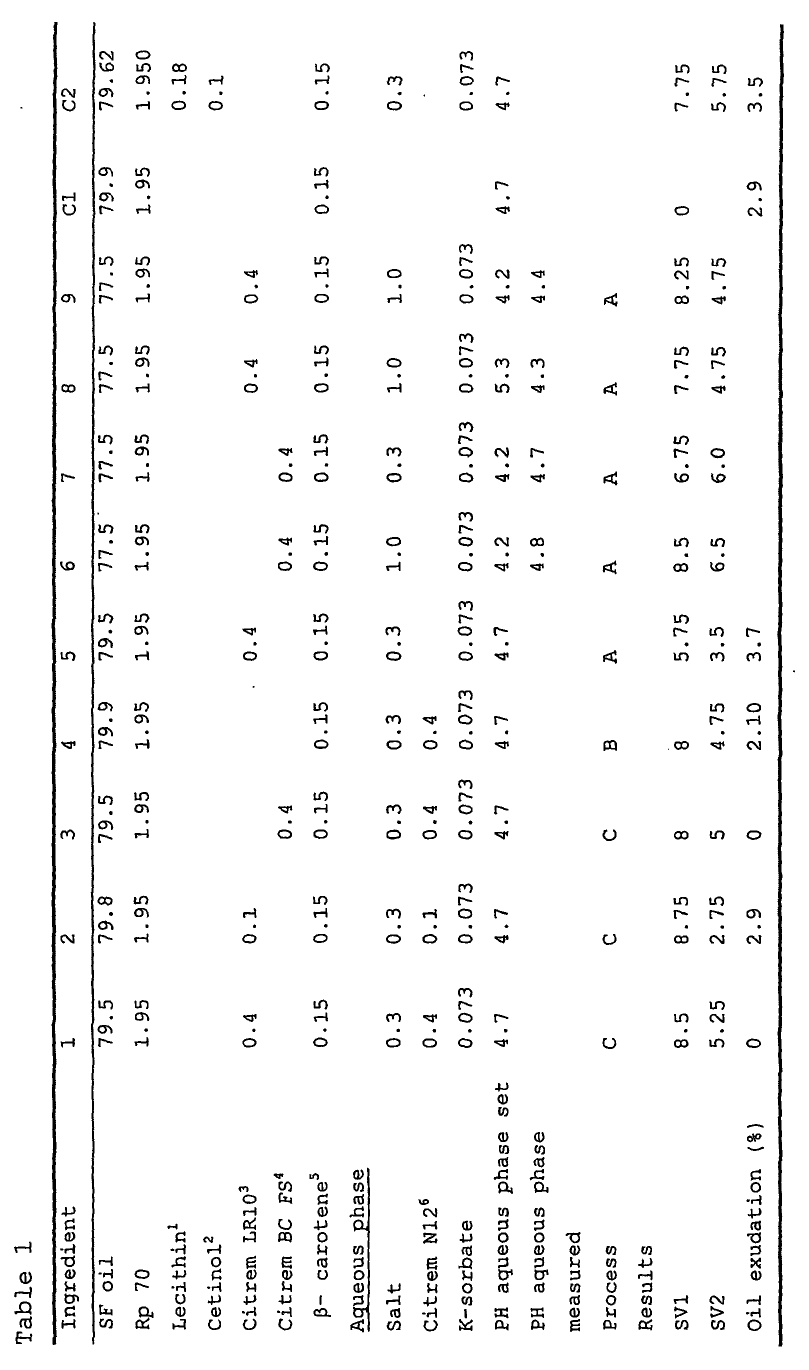

### Explanation of table 1:

The balance of all composition to 100% is water
Blank space means: not determined/not present
SF oil: Sunflower oil
RP 70 : Rapeseed oil hardened to a slip melting point of 70 °C.
The total fat blend showed an N line of N05 = 2,5 - 3,0;
N15 = 2,0 - 2,5; N25 = 2,0 - 2,5; N35 = 1,5 - 2,0
1: Lecithin was hydrolysed soybean lecithin (Bolec MT) obtained from UMZ (Unimills Zwijndrecht)
2: Alcohol-soluble fraction from fractionation of native soybean lecithin with alcohol; cetinol from UMZ
3: Citric acid ester which is in the acidic form and fat dispersible, the citric acid ester is esterified with a monoglyceride derived from sunflower oil
4: Citric acid ester which is in the acidic form and fat dispersible, the citric acid ester is esterified with a monoglyceride with fatty acid chain derived from fully hardened palm oil.
5: β-carotene was added in the form of an 0.4 wt% solution in sunflower oil
6: Citric acid ester which is in the neutralised form and water dispersible, the citric acid ester is esterified with a monoglyceride with a fully hydrogenated fatty acid chain.

### Conclusions

A product comprising citric acid ester in the aqueous phase and/or in the fat phase shows better spattering behaviour than a product comprising lecithins. If the total amount of citric acid esters in the product is lowered (0.2 wt% in stead of 0.8 wt%; example 1 versus example 2), the secondary spattering performance is reduced.
Products comprising citric acid ester in the aqueous phase only (example 4) resp. in the oil phase only (example 5-9) show improved spattering behaviour compared to products that do not comprise any anti-spattering agent (comparative example 1 (C1)).

### Example 10-15

The procedure described above was followed.
All samples showed a Bostwick value of about 15 cm/30 sec at 15 °C.

**Table 2 pourable products comprising 75 wt% of a fat phase**

| Ingredient | 10 | 11 | 12 | 13 | 14 | 15 |
|---|---|---|---|---|---|---|
| SF oil | 72.6 | 72.6 | 72.6 | 72.6 | 72.6 | 67.2 |
| Rp 70 | 1.95 | 1.95 | 1.95 | 1.95 | 1.95 | 1.95 |
| Lecithin¹ | | | | | | |
| Cetinol² | | | | | | |
| Citrem LR10³ | 0.4 | | | | 0.4 | |
| Citrem BC FS⁴ | | 0.4 | | | | 0.7 |
| β- carotene⁵ | 0.15 | 0.15 | 0.15 | 0.15 | 0.15 | 0.15 |
| Aqueous phase | | | | | | |
| Salt | 0.3 | 0.3 | 0.3 | 0.3 | 1.5 | 1.0 |
| Citrem N12⁶ | 0.4 | 0.4 | 0.4 | 0.8 | 0.4 | 0 |
| K-sorbate | 0.073 | 0.073 | 0.073 | 0.073 | 0.073 | 0.073 |
| PH aqueous phase | 4.7 | 4.7 | 4.7 | 4.7 | 4.7 | 5.3 |
| | | | | | | |
| Process | C | C | B | B | C | A |
| **Results** | | | | | | |
| SV1 | 5.75 | 6.75 | 6.25 | 7.5 | 7.75 | 7.0 |
| SV2 | 4.75 | 5.25 | 1.75 | 3.75 | 6.25 | 6.5 |

The balance of all composition to 100% is water

### Conclusions

Products wherein citric acid ester was added both to the fat phase and to the aqueous phase show better spattering behaviour than products comprising lecithin.
Products comprising citric acid ester in the aqueous phase only (example 12 and 13) show improved spattering behaviour compared to products that do not comprise any anti-spattering agent.
If the total amount of citric acid ester in the aqueous phase is increased from 0.4 wt% to 0.8 wt% SV1 and SV2 are improved.

Products wherein a the citric acid ester is esterified with monoglyceride with an unsaturated fatty acid chain (example 10), show reduced performance in spattering compared to products comprising citric acid ester wherein the monoglyceride has a saturated fatty acid chain.
The increase of the salt content in example 14 shows that spattering behaviour can be even more improved.

Comparative example 3 (C3) was of the same composition as example 14 except that the fat phase did not contain any citric acid ester but 0.18 wt% Bolec MT and 0.1 wt% cetinol. For this product SV1 was 6.25 and SV2 was 4.75.

## Claims

1. Pourable, edible frying composition having a Bostwick value of at least 7 cm/30 sec at 15°C comprising an aqueous phase and a fatty phase, which composition comprises an ester of citric acid with a monoglyceride or with a combination of a monoglyceride and a diglyceride.

2. Pourable, edible frying composition according to claim 1, wherein the ester is an ester of citric acid with a mixture of a monoglyceride and a diglyceride wherein the amount of monoglyceride is at least 30 wt%.

3. Pourable frying composition according to claim 1 or 2 wherein the composition is essentially free of lecithins or compounds derived from lecithin.

4. Pourable frying composition according to any one of claims 1-3, wherein substantially no added monoglyceride is present.

5. Pourable frying composition according to claim 4, wherein the amount of added monoglyceride is less than 0.1 wt.%.

6. Pourable frying composition according to any of claims 1-5 wherein the total amount of the ester of citric acid is 0.07 to 3 wt%.

7. Pourable frying composition according to any of claims 1-6, wherein the composition comprises an amount of an inorganic salt of 1 wt.% or more.

8. Pourable frying composition according to any of claims 1-7, wherein the pH of the composition is 5.5 or lower.

9. Pourable frying composition according to claim 1 or 2 which comprises after melting an aqueous phase, a fat phase and optionally an intermediate phase, wherein the aqueous phase and the intermediate phase together comprise 60 to 100 wt% of the total amount of the ester of citric acid present in the frying composition.

10. Pourable frying composition according to any of claims 1-9 which comprises after melting an aqueous phase, a fat phase and optionally an intermediate phase, wherein the aqueous phase and the intermediate phase together comprise from 0.07 to 3 wt% of said ester of citric acid on total product weight.

11. Pourable frying composition according to any of claims 1-10 wherein the monoglyceride or diglyceride is selected from the group of monoglycerides or diglycerides with fatty acids having a chain length of between 4 and 24 carbon atoms.

12. Pourable frying composition according to claim 11, wherein at least 50 wt% of the esters are esters of citric acid with a monoglyceride or with a diglyceride having a fatty acid chain which is saturated.

13. Pourable frying composition according to any of the preceding claims wherein the citric acid ester is selected from the group comprising Grindsted^{tm} CITREM LR 10 citric acid ester, Grindsted^{tm} CITREM BC-FS, Lamegin ZE 306, Myvatem SC, CITREM 2931, Paalsgaard 3301, Lamegin ZE 309 liquid, Grindsted^{tm} CITREM N12, Lamegin ZE 609, Lamegin 609 liquid, Palsgaard 3325, CITREM 2932 and combinations thereof.

14. Process for the preparation of a pourable, edible frying composition which comprises the steps of
(a) preparation of an aqueous phase (b) preparation of an oil phase,
wherein an ester of citric acid with a monoglyceride or with a combination of monoglyceride and a diglyceride is added to the aqueous phase and/or the oil phase in step (a) and/or (b),
(c) mixing of the aqueous phase and the oil phase to obtain an emulsion.

## Patentansprüche

1. Gießbare, essbare Bratzusammensetzung mit einem Bostwick-Wert von wenigstens 7 cm/30 s bei 15°C, die eine wässrige Phase und eine Fettphase umfasst, wobei die Zusammensetzung einen Ester von Citronensäure mit einem Monoglycerid oder mit einer Kombination aus einem Monoglycerid und einem Diglycerid umfasst.

2. Gießbare, essbare Bratzusammensetzung nach Anspruch 1, wobei der Ester ein Ester von Citronensäure mit einem Gemisch eines Monoglycerids und eines Diglycerids, worin die Menge an Monoglycerid wenigstens 30 Gew.-% ist, ist.

3. Gießbare Bratzusammensetzung nach Anspruch 1 oder Anspruch 2, wobei die Zusammensetzung im Wesentlichen frei von Lecithinen oder Verbindungen, die von Lecithin abgeleitet sind, ist.

4. Gießbare Bratzusammensetzung nach einem der Ansprüche 1 bis 3, wobei im Wesentlichen kein zugesetztes Monoglycerid vorliegt.

5. Gießbare Bratzusammensetzung nach Anspruch 4, wobei die Menge an zugesetztem Monoglycerid weniger als 0,1 Gew.-% ist.

6. Gießbare Bratzusammensetzung nach einem der Ansprüche 1 bis 5, wobei die Gesamtmenge des Esters von Citronensäure 0,07 bis 3 Gew.-% ist.

7. Gießbare Bratzusammensetzung nach einem der Ansprüche 1 bis 6, wobei die Zusammensetzung eine Menge eines anorganischen Salzes von 1 Gew.-% oder mehr umfasst.

8. Gießbare Bratzusammensetzung nach einem der Ansprüche 1 bis 7, wobei der pH der Zusammensetzung 5,5 oder niedriger ist.

9. Gießbare Bratzusammensetzung nach einem der Anspruch 1 oder 2, die nach Schmelzen eine wässrige Phase, eine Fettphase und gegebenenfalls eine Zwischenphase umfasst, wobei die wässrige Phase und die Zwischenphase zusammen 60 bis 100 Gew.-% der Gesamtmenge des Esters von Citronensäure, die in der Bratzusammensetzung vorliegt, umfassen.

10. Gießbare Bratzusammensetzung nach einem der Ansprüche 1 bis 9, die nach Schmelzen eine wässrige Phase, eine Fettphase und gegebenenfalls eine Zwischenphase umfasst, wobei die wässrige Phase und die Zwischenphase zusammen 0,07 bis 3 Gew.-% des Esters von Citronensäure, bezogen auf das Gesamtprodukt, umfassen.

11. Gießbare Bratzusammensetzung nach einem der Ansprüche 1 bis 10, wobei das Monoglycerid oder Diglycerid aus der Gruppe von Monogylceriden oder Diglyceriden mit Fettsäuren, die eine Kettenlänge zwischen 4 und 24 Kohlenstoffatomen haben, ausgewählt ist.

12. Gießbare Bratzusammensetzung nach einem der Anspruch 11, wobei wenigstens 50 Gew.-% der Ester Ester von Citronensäure mit einem Monoglycerid oder mit einem Diglycerid, das eine Fettsäurekette hat, welche gesättigt ist, sind.

13. Gießbare Bratzusammensetzung nach einem der vorangehenden Ansprüche, wobei der Citronensäureester aus der Gruppe, umfassend Grindsted^{tm} CITREM LR 10-Citronensäureester, Grindsted^{tm} CITREM BC-FS, Lamegin ZE 306, Myvatem SC, CITREM 2931, Palsgaard 3301, flüssiges Lamegin ZE 309, Grindsted^{tm} CITREM N12, Lamegin ZE 609, flüssiges Lamegin 609, Palsgaard 3325, CITREM 2932 und Kombinationen davon, ausgewählt ist.

14. Verfahren für die Herstellung einer gießbaren, essbaren Bratzusammensetzung, umfassend die Schritte
(a) Herstellung einer wässrigen Phase, (b) Herstellung einer Ölphase,
wobei ein Ester von Citronensäure mit einem Monoglycerid oder mit einer Kombination aus Monoglycerid und einem Diglycerid der wässrigen Phase und/oder der Ölphase in Schritt (a) und/oder (b) zugesetzt wird,
(c) Vermischen der wässrigen Phase und der Ölphase unter Erhalt einer Emulsion.

## Revendications

1. Composition pour friture versable, comestible ayant une valeur de Bostwick d'au moins 7 cm/30 sec à 15 °C, comprenant une phase aqueuse et une phase grasse, laquelle composition comprend un ester d'acide citrique avec un monoglycéride ou avec une combinaison d'un monoglycéride et d'un diglycéride.

2. Composition pour friture versable, comestible selon la revendication 1, dans laquelle l'ester est un ester d'acide citrique avec un mélange d'un monoglycéride et d'un diglycéride dans lequel la quantité de monoglycéride est d'au moins 30 % en poids.

3. Composition pour friture versable selon la revendication 1 ou 2, dans laquelle la composition est essentiellement dépourvue de lécithines ou de composés dérivés de la lécithine.

4. Composition pour friture versable selon l'une quelconque des revendications 1 à 3, dans laquelle substantiellement aucun monoglycéride ajouté n'est présent.

5. Composition pour friture versable selon la revendication 4, dans laquelle la quantité de monoglycéride ajouté est inférieure à 0,1 % en poids.

6. Composition pour friture versable selon l'une quelconque des revendications 1 à 5, dans laquelle la quantité totale de l'ester d'acide citrique est de 0,07 à 3 % en poids.

7. Composition pour friture versable selon l'une quelconque des revendications 1 à 6, dans laquelle la composition comprend une quantité d'un sel inorganique de 1 % en poids ou plus.

8. Composition pour friture versable selon l'une quelconque des revendications 1 à 7, dans laquelle le pH de la composition est égal ou inférieur à 5,5.

9. Composition pour friture versable selon la revendication 1 ou 2 qui comprend, après fusion, une phase aqueuse, une phase grasse et éventuellement une phase intermédiaire, dans laquelle la phase aqueuse et la phase intermédiaire comprennent conjointement de 60 à 100 % en poids de la quantité totale de l'ester d'acide citrique présent dans la composition pour friture.

10. Composition pour friture versable selon l'une quelconque des revendications 1 à 9, qui comprend, après fusion, une phase aqueuse, une phase grasse et éventuellement une phase intermédiaire, dans laquelle la phase aqueuse et la phase intermédiaire comprennent conjointement de 0,07 à 3 % en poids dudit ester d'acide citrique sur le poids total du produit.

11. Composition pour friture versable selon l'une quelconque des revendications 1 à 10, dans laquelle le monoglycéride ou le diglycéride est choisi dans le groupe des monoglycérides ou des diglycérides avec des acides gras ayant une longueur de chaîne allant de 4 à 24 atomes de carbone.

12. Composition pour friture versable selon la revendication 11, dans laquelle au moins 50 % en poids des esters sont des esters d'acide citrique avec un monoglycéride ou avec un diglycéride ayant une chaîne d'acides gras qui est saturée.

13. Composition pour friture versable selon l'une quelconque des revendications précédentes dans laquelle l'ester d'acide citrique est choisi dans le groupe comprenant l'ester d'acide citrique Grindsted^{™} CITREM LR 10, l'ester d'acide citrique Grindsted^{™} CITREM BC-FS, Lamegin ZE 306, Myvatem SC, CITREM 2931, Palsgaard 3301, Lamegin ZE 309 liquide, Grindsted ^{™} CITREM N12, Lamegin ZE 609, Lamegin 609 liquide, Palsgaard 3325, CITREM 2932 et des combinaisons de ceux-ci.

14. Procédé de préparation d'une composition pour friture versable, comestible qui comprend les étapes consistant à :
(a) préparer une phase aqueuse, (b) préparer une phase huileuse,
dans laquelle un ester d'acide citrique avec un monoglycéride ou avec une combinaison d'un monoglycéride et d'un diglycéride est ajouté à la phase aqueuse et/ou à la phase huileuse à l'étape (a) et/ou (b),
(c) mélanger la phase aqueuse et la phase huileuse pour obtenir une émulsion.
